# EUROPÄISCHE PATENTSCHRIFT

(11) **EP 4 102 949 B1**
(45) Veröffentlichungstag und Bekanntmachung des Hinweises auf die Patenterteilung: **26.03.2025**
(21) Anmeldenummer: 22715546.2
(22) Anmeldetag: 02.03.2022
(51) Int. Cl.: A01C 7/04, A01C 7/08, A01C 7/18, A01C 7/20

(54) **AUSBRINGAGGREGAT FÜR EINE LANDWIRTSCHAFTLICHE AUSBRINGMASCHINE**
APPLICATION UNIT FOR AN AGRICULTURAL APPLICATION MACHINE
UNITÉ D'ÉPANDAGE POUR UNE MACHINE D'ÉPANDAGE AGRICOLE

(30) Priorität: 31.03.2021 DE 102021108172
(43) Veröffentlichungstag der Anmeldung: 21.12.2022
(73) Patentinhaber: Amazonen-Werke H. Dreyer SE & Co. KG, 49205 Hasbergen (DE)
(72) Erfinder: ARNOLD, Roland, 27777 Ganderkesee (DE); DERTENKÖTTER, Fabian, 48346 Ostbevern (DE); HILBERT, Florenz, 48282 Emsdetten (DE); JOHANNABER, Stefan Jan, 49536 Lienen (DE); RADEKE, Jan Pilipp, 27211 Bassum (DE); TECKEMEYER, Stephan, 49504 Lotte (DE); WIEN, Thomas, 28816 Stuhr (DE)
(86) Internationale Anmeldenummer: PCT/EP2022/055237
(87) Internationale Veröffentlichungsnummer: WO 2022/207220

(56) Entgegenhaltungen:
- EP-A1- 2 342 966
- EP-A1- 3 586 586
- EP-A1- 3 659 417
- DE-A1- 102015 114 146
- DE-A1- 102015 114 150

## Beschreibung

Die Erfindung betrifft ein Ausbringaggregat für eine landwirtschaftliche Ausbringmaschine nach dem Oberbegriff des Patentanspruchs 1 und ein Verfahren zum Ablegen von Granulat auf eine landwirtschaftliche Nutzfläche nach dem Oberbegriff des Patentanspruchs 13.

Aus der Druckschrift EP 3 586 586 A1 ist ein Saatgutversorgungssystem bekannt. Aus der Druckschrift DE 10 2015 114 150 A1 ist eine Sämaschine und ein Verfahren zum Betrieb einer Sämaschine bekannt. Aus der Druckschrift DE 10 2015 114 146 A1 ist eine Dosiervorrichtung für granulares Material mit pneumatischer Nachfüllung bekannt. Aus der Druckschrift EP 2 342 966 A1 ist eine kombinierte Verteilmaschine bekannt. Schließlich wird in der EP 3 659 417 A1 ein Ausbringaggregat beschrieben, dass mittels Luft das Granulat in einen Granulatportionierer transportieren kann.

Bei der Bewirtschaftung von landwirtschaftlichen Flächen ist es regelmäßig erforderlich, dass Granulat, beispielsweise Dünger, auf die landwirtschaftliche Nutzfläche ausgebracht wird. Eine pflanzenbaulich optimale Nährstoffversorgung kann in einer Vielzahl von Anwendungsfällen dadurch erreicht werden, dass der Dünger diskontinuierlich in Form von Düngerportionen auf die landwirtschaftliche Nutzfläche abgelegt wird. Zur Erzeugung solcher Granulatportionen können Ausbringaggregate landwirtschaftlicher Ausbringmaschinen mit Granulatportionierern ausgestattet sein, welche die Granulatkörner eines kontinuierlichen Granulatstroms zu Granulatportionen zusammenführen.

In der Praxis besteht jedoch das Problem, dass sich das Granulat aufgrund einer ungeeigneten, häufig zu hohen, Luftmenge in der den Granulatportionierer erreichenden Granulatströmung nicht präzise portionieren lässt. Außerdem existieren Ausbringsituationen, in denen es wünschenswert ist, die portionsweise Ablage des Granulats temporär und/oder lokal zu unterbrechen und eine herkömmliche Bandapplikation umzusetzen. Die Umschaltung von einer portionsweisen Applikation des Granulats auf eine Bandapplikation erfordert aber auch eine Anpassung der Luftmenge in der Granulatströmung und ist aus diesem Grund in der Praxis bisher nicht umsetzbar.

Die der Erfindung zugrundeliegende Aufgabe besteht somit darin, die Luftmenge einer einem Granulatportionierer zugeleiteten Granulatströmung anpassen zu können.

Die Aufgabe wird durch ein Ausbringaggregat mit den Merkmalen des Anspruchs 1 und mit einem Verfahren gemäß dem Anspruch 13 gelöst.

Durch den Luftabscheider kann die Luftmenge der Granulatströmung, aus welcher in einem Betriebsmodus eines Ausbringaggregats Granulatportionen erzeugt werden sollen, angepasst werden. Dabei kann mittels des Luftabscheiders beispielsweise eine Teilmenge der Luft aus der Granulatströmung abgeschieden werden. Alternativ kann im Wesentlichen die gesamte Luft aus der Granulatströmung abgeschieden werden. Das Granulat kann beispielsweise Dünger sein, sodass mittels des Luftabscheiders Luft aus einer Düngerströmung abscheidbar ist. Der Granulatportionierer kann folglich beispielsweise ein Düngerportionierer sein, welcher dazu eingerichtet ist, Düngerportionen zu erzeugen.

Der Luftabscheider kann ein Fliehkraftabscheider bzw. ein Zyklon sein. Der Luftabscheider weist vorzugsweise eine Wendelung auf. Die überschüssige Luft wird von dem Luftabscheider über einen Luftauslass, vorzugsweise in die Umgebung, abgegeben.

In einer bevorzugten Ausführungsform des erfindungsgemäßen Ausbringaggregats ist der Luftabscheider in Strömungsrichtung der Granulatströmung vor dem Granulatportionierer angeordnet. Der Luftabscheider kann direkt auf den Granulatportionierer aufgesetzt bzw. aufgesteckt sein. In diesem Fall wird mittels des Luftabscheiders Luft vor dem Granulatportionierer aus der Granulatströmung abgeschieden, also bevor diese in den Granulatportionierer eingeleitet wird. Der Luftabscheider ist vorzugsweise Bestandteil eines Granulatführungssystems, mittels welchem die unportioniertes Granulat fördernde Granulatströmung in einen Portionierbereich des Granulatportionierers einleitbar ist. Mittels des Granulatführungssystems sind

Das erfindungsgemäße Ausbringaggregat ist in einem Portionsablagemodus, in welchem das Granulat diskontinuierlich in Form von durch den Granulatportionierer erzeugten Granulatportionen auf die landwirtschaftliche Nutzfläche abgelegt wird, und in einem Bandablagemodus, in welchem das Granulat kontinuierlich in Form eines Granulatbandes auf die landwirtschaftliche Nutzfläche abgelegt wird, betreibbar. Das Ausbringaggregat lässt sich in diesem Fall also sowohl zur portionsweisen Ablage des Granulats als auch zur herkömmlichen Bandapplikation des Granulats einsetzen. Granulat, bei welchem die Portionserzeugung problematisch, nicht möglich oder nicht erwünscht ist, kann mit dem Ausbringaggregat also auch auf konventionelle Weise als kontinuierliches Granulatband abgelegt werden. Das Granulat kann beispielsweise Dünger sein. In dem Portionsablagemodus wird also Dünger diskontinuierlich in Form von Düngerportionen abgelegt. In dem Bandablagemodus wird in diesem Fall Dünger kontinuierlich in Form eines Düngerbandes auf die landwirtschaftliche Nutzfläche abgelegt.

Vorzugsweise ist eine Steuerungseinrichtung des Ausbringaggregats dazu eingerichtet, den Luftabscheider im Abscheidemodus zu betreiben, wenn das Ausbringaggregat in dem Portionsablagemodus betrieben wird. Vorzugsweise ist die Steuerungseinrichtung des Ausbringaggregats dazu eingerichtet, den Luftabscheider in dem Durchleitungsmodus zu betreiben, wenn das Ausbringaggregat in dem Bandablagemodus betrieben wird.

In einer anderen Ausführungsform des erfindungsgemäßen Ausbringaggregats weist der Granulatportionierer einen in dem Portionierbereich angeordneten Portionierrotor auf, welcher mittels eines Rotorantriebs des Granulatportionierers rotatorisch antreibbar und dazu eingerichtet ist, in dem Portionsablagemodus durch eine Rotationsbewegung sich in dem Portionierbereich befindende Granulatkörner zu einer Granulatportion zusammenzuführen. Eine Steuerungseinrichtung des Ausbringaggregats ist vorzugsweise dazu eingerichtet, den Rotorantrieb des Portionierrotors in dem Bandablagemodus derart anzusteuern, dass der Portionierrotor eine Drehgeschwindigkeit aufweist, welche der Strömungsgeschwindigkeit der Granulatströmung entspricht, sodass kein Zusammenführen der sich in dem Portionierbereich befindenden einem Einlasskanal und zwei Auslasskanälen angeordnet sein, wobei die Auslasskanäle einzeln sperrbar sein können. Die Umschalteinrichtung kann beispielsweise ein Bestandteil des Luftabscheiders sein oder in dem Luftabscheider angeordnet sein.

In einer weiteren bevorzugten Ausführungsform des erfindungsgemäßen Ausbringaggregats ist die Umschalteinrichtung manuell einstellbar und/oder weist einen ansteuerbaren Aktor auf, mittels welchem die Umschalteinrichtung einstellbar ist. Durch die manuelle Einstellung der Umschalteinrichtung kann manuell vom Bediener festgelegt werden, ob die Granulatströmung durch den Granulatportionierer oder durch die Umgehungsleitung strömen soll. Die Umschalteinrichtung kann ein oder mehrere betätigbare Umschaltelemente umfassen.

Eine landwirtschaftliche Ausbringmaschine weist vorzugsweise mehrere nebeneinander angeordnete Ausbringaggregate auf, wobei die einzelnen Ausbringaggregate jeweils einer Reihe zugeordnet sind, entlang welcher das Granulat auf die landwirtschaftliche Nutzfläche abgelegt werden soll. Die Ausbringaggregate einer Ausbringmaschine können separat voneinander gesteuert werden, sodass in einer oder mehreren Reihen eine portionsweise Ausbringung des Granulats erfolgt und gleichzeitig in einer oder mehreren Reihen eine Bandapplikation des Granulats erfolgt. Auf diese Weise kann die portionsweise Ausbringung des Granulats lokal und temporär unterbrochen und durch die konventionelle Bandapplikation ersetzt werden. Vorzugsweise können auch die Luftabscheider der jeweiligen Ausbringaggregate bzw. deren Abscheideverhalten unabhängig voneinander gesteuert werden.

Die der Erfindung zugrundeliegende Aufgabe wird ferner durch ein Verfahren der eingangs genannten Art gelöst, wobei das Ausbringaggregat im Rahmen des erfindungsgemäßen Verfahrens in einem Bandablagemodus, in welchem das Granulat kontinuierlich in Form eines Granulatbandes auf die landwirtschaftliche Nutzfläche abgelegt wird, betrieben wird.

Das Granulat wird vorzugsweise mittels eines Ausbringaggregats nach einer der vorstehend beschriebenen Ausführungsformen auf die landwirtschaftliche Nutzfläche abgelegt. Hinsichtlich der Vorteile und Modifikationen des erfindungsgemäßen Verfahrens wird somit

Ferner kann der gesamte Granulatportionierer entnommen und durch einen Adapter ersetzt werden, um von dem Portionsablagemodus auf den Bandablagemodus umzustellen. Alternativ kann der Granulatportionierer mittels eines Adapters überbrückt werden, sodass die Granulatströmung nicht durch den Granulatportionierer strömt.

In einer Weiterbildung des erfindungsgemäßen Ausbringaggregats ist in den Portionierbereich des Granulatportionierers im Portionsablagemodus ein Portionierrotor und im Bandablagemodus ein Bandablagerotor eingesetzt. Der Portionierrotor und der Bandablagerotor sind mittels eines Rotorantriebs des Granulatportionierers rotatorisch antreibbar. Der Portionierrotor ist dazu eingerichtet, durch eine Rotationsbewegung sich in dem Portionierbereich befindende Granulatkörner zu einer Granulatportion zusammenzuführen. Der Bandablagerotor ist dazu eingerichtet, sich in dem Portionierbereich befindende Granulatkörner durch eine Rotationsbewegung ohne Portionsbildung aus dem Portionierbereich herauszufördern und/oder durch den Portionierbereich durchzuleiten. Der Portionierrotor kann beispielsweise einen oder mehrere Portionierflügel aufweisen, welche während einer Rotationsbewegung sich in dem Portionierbereich befindende Granulatkörner einsammeln. Der Bandablagerotor kann eine Mehrzahl von Mitnehmern oder eine umlaufende Bürste bzw. einen umlaufenden Bürstenring aufweisen, wobei die mehreren Mitnehmer und die Bürste bzw. der Bürstenring trotz einer Rotationsbewegung des Bandablagerotors die sich in dem Portionierbereich befindenden Granulatkörner nicht zusammenführen.

In einer bevorzugten Ausführungsform weist das erfindungsgemäße Ausbringaggregat ein Granulatführungssystem auf, mittels welchem eine unportioniertes Granulat fördernde Granulatströmung in einen Portionierbereich des Granulatportionierers einleitbar ist und mittels welchem von dem Granulatportionierer erzeugte Granulatportionen in Richtung der landwirtschaftlichen Nutzfläche führbar sind. Das Granulatführungssystem weist also vorzugsweise eine oder mehrere Granulatleitungen oder -kanäle auf, welche in Strömungsrichtung des Granulats vor dem Granulatportionierer liegen. Ferner weist das Granulatführungssystem vorzugsweise eine oder mehrere Granulatleitungen oder -kanäle auf, welche in Strömungsrichtung des Granulats hinter dem Granulatportionierer liegen. Das Granulatführungssystem umfasst vorzugsweise eine Zuführleitung, über welche dem Granulatportionierer eine Granulatströmung zugeführt werden kann. Vorzugsweise weist das Granulatführungssystem einen Schusskanal auf, über welchen erzeugte Granulatportionen in Richtung der landwirtschaftlichen Nutzfläche geführt werden. Der Luftabscheider kann Bestandteil des Granulatführungssystems sein.

Das erfindungsgemäße Ausbringaggregat wird ferner dadurch vorteilhaft weitergebildet, dass das Granulatführungssystem dazu eingerichtet ist, die Granulatströmung in dem Bandablagemodus und/oder dem Portionsablagemodus in den Granulatportionierer, insbesondere in den Portionierbereich des Granulatportionierers, einzuleiten. Wenn die Granulatströmung in dem Bandablagemodus in den Granulatportionierer eingeleitet wird, erfolgt in dem Granulatportionierer keine Portionsbildung. Wenn die Granulatströmung in dem Portionsablagemodus in den Granulatportionierer eingeleitet wird, erfolgt in dem Granulatportionierer eine Portionsbildung.

In einer anderen Ausführungsform des erfindungsgemäßen Ausbringaggregats weist das Granulatführungssystem eine Umgehungsleitung auf, mittels welcher die Granulatströmung an dem Granulatportionierer vorbeileitbar ist, sodass keine Einleitung der Granulatströmung in den Granulatportionierer erfolgt. Alternativ oder zusätzlich kann der Granulatportionierer eine Umgehungsleitung aufweisen, mittels welcher die Granulatströmung an den Portionierbereich des Granulatportionierers vorbeileitbar ist, sodass keine Einleitung der Granulatströmung in den Portionierbereich des Granulatportionierers erfolgt.

In einer vorteilhaften Ausführungsform des erfindungsgemäßen Ausbringaggregats ist die Umgehungsleitung mit einer Umschalteinrichtung verbunden, über welche die Granulatströmung wahlweise durch den Granulatportionierer oder durch die Umgehungsleitung leitbar ist. Die Umschalteinrichtung kann eine Strömungsweiche mit einer Umschaltklappe sein. Die Umschalteinrichtung kann mit Endlagen-Sensoren für die Klappe ausgestattet sein. Die Umschalteinrichtung kann in oder hinter einem Y-Stück mit einem Einlasskanal und zwei Auslasskanälen angeordnet sein, wobei die Auslasskanäle einzeln sperrbar sein können. Die Umschalteinrichtung kann beispielsweise ein Bestandteil des Luftabscheiders sein oder in dem Luftabscheider angeordnet sein.

In einer weiteren bevorzugten Ausführungsform des erfindungsgemäßen Ausbringaggregats ist die Umschalteinrichtung manuell einstellbar und/oder weist einen ansteuerbaren Aktor auf, mittels welchem die Umschalteinrichtung einstellbar ist. Durch die manuelle Einstellung der Umschalteinrichtung kann manuell vom Bediener festgelegt werden, ob die Granulatströmung durch den Granulatportionierer oder durch die Umgehungsleitung strömen soll. Die Umschalteinrichtung kann ein oder mehrere betätigbare Umschaltelemente umfassen.

Eine landwirtschaftliche Ausbringmaschine weist vorzugsweise mehrere nebeneinander angeordnete Ausbringaggregate auf, wobei die einzelnen Ausbringaggregate jeweils einer Reihe zugeordnet sind, entlang welcher das Granulat auf die landwirtschaftliche Nutzfläche abgelegt werden soll. Die Ausbringaggregate einer Ausbringmaschine können separat voneinander gesteuert werden, sodass in einer oder mehreren Reihen eine portionsweise Ausbringung des Granulats erfolgt und gleichzeitig in einer oder mehreren Reihen eine Bandapplikation des Granulats erfolgt. Auf diese Weise kann die portionsweise Ausbringung des Granulats lokal und temporär unterbrochen und durch die konventionelle Bandapplikation ersetzt werden. Vorzugsweise können auch die Luftabscheider der jeweiligen Ausbringaggregate bzw. deren Abscheideverhalten unabhängig voneinander gesteuert werden.

Die der Erfindung zugrundeliegende Aufgabe wird ferner durch ein Verfahren der eingangs genannten Art gelöst, wobei im Rahmen des erfindungsgemäßen Verfahrens Luft aus der Granulatströmung mittels eines Luftabscheiders des Ausbringaggregats abgeschieden wird. Das Granulat wird vorzugsweise mittels eines Ausbringaggregats nach einer der vorstehend beschriebenen Ausführungsformen auf die landwirtschaftliche Nutzfläche abgelegt. Hinsichtlich der Vorteile und Modifikationen des erfindungsgemäßen Verfahrens wird somit zunächst auf die Vorteile und Modifikationen des erfindungsgemäßen Ausbringaggregats verwiesen.

Vorzugsweise umfasst das Verfahren das Einstellen des Abscheideverhaltens des Luftabscheiders, insbesondere in Abhängigkeit des eingestellten Ablagemodus des Ausbringaggregats.

Das erfindungsgemäße Verfahren kann ferner das Betreiben des Ausbringaggregats in einem Portionsablagemodus, in welchem das Granulat diskontinuierlich in Form von Granulatportionen auf die landwirtschaftliche Nutzfläche abgelegt wird, umfassen. Außerdem kann das Verfahren das Betreiben des Ausbringaggregats in einem Bandablagemodus, in welchem das Granulat kontinuierlich in Form eines Granulatbandes auf die landwirtschaftliche Nutzfläche abgelegt wird, umfassen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Ausbringaggregats, welches in einem Portionsablagemodus betrieben wird;
- Fig. 2: das in der Fig. 1 abgebildete Ausbringaggregat, währenddessen es in einem Bandablagemodus betrieben wird;
- Fig. 3: ein System aus einem Ausbringaggregat und einem Bandablagerotor sowie einem Portionierrotor;
- Fig. 4: ein weiteres Ausführungsbeispiel des erfindungsgemäßen Ausbringaggregats, welches in einem Portionsablagemodus betrieben wird;
- Fig. 5: das in der Fig. 4 abgebildete Ausbringaggregat, währenddessen es in einem Bandablagemodus betrieben wird;
- Fig. 6: ein weiteres Ausführungsbeispiel des erfindungsgemäßen Ausbringaggregats, welches in einem Portionsablagemodus betrieben wird;
- Fig. 7: das in der Fig. 6 abgebildete Ausbringaggregat, währenddessen es in einem Bandablagemodus betrieben wird;
- Fig. 8: ein weiteres Ausführungsbeispiel des erfindungsgemäßen Ausbringaggregats mit einem Luftabscheider;
- Fig. 9: das in der Fig. 8 abgebildete Ausbringaggregat in einer Schnittdarstellung;
- Fig. 10: den Luftabscheider des in der Fig. 8 abgebildeten Ausbringaggregats in einer Draufsicht;
- Fig. 11: den in der Fig. 10 abgebildeten Luftabscheider in einer Schnittdarstellung; und
- Fig. 12: den in der Fig. 10 abgebildeten Luftabscheider in einer Seitenansicht.

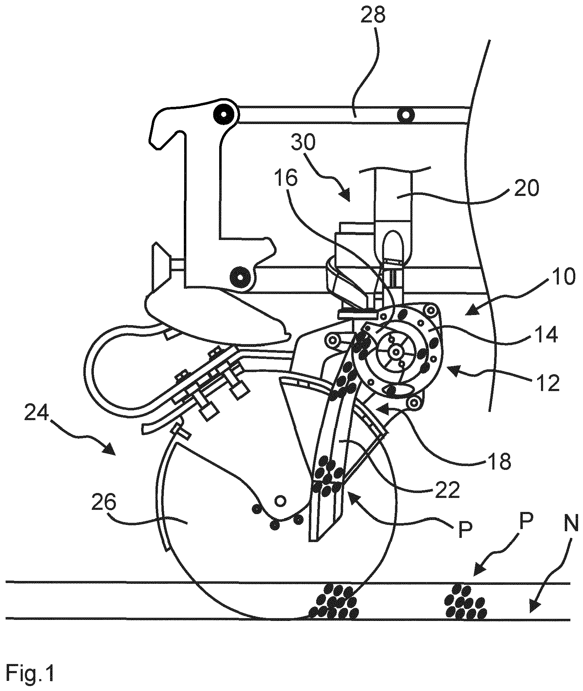

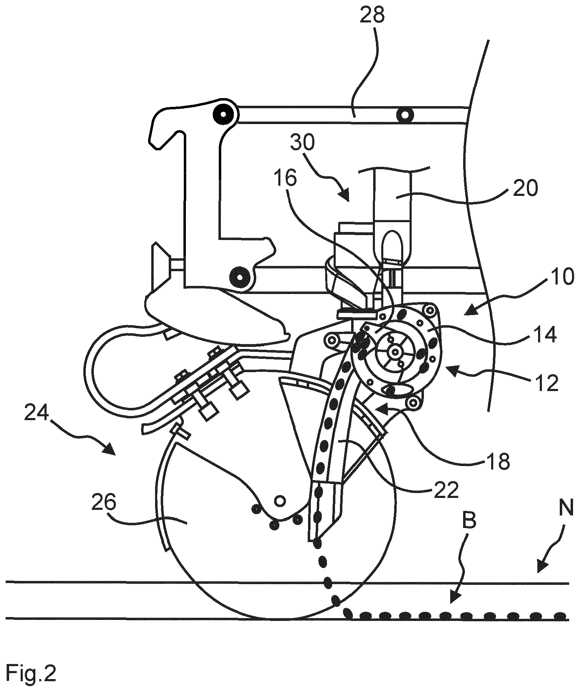

Die Fig. 1 und 2 zeigen ein Ausbringaggregat 10 für eine landwirtschaftliche Ausbringmaschine, mittels welchem Granulat, nämlich Dünger, auf eine landwirtschaftliche Nutzfläche N abgelegt werden kann.

Das Ausbringaggregat 10 weist einen Granulatportionierer 12 auf, mittels welchem Granulatportionen P erzeugt werden können. Hierzu weist der Granulatportionierer 12 einen Portionierbereich 14 auf, in welchem ein Portionierrotor 16 angeordnet ist. Der Portionierrotor 16 wird mittels eines Rotorantriebs des Granulatportionierers 12 rotatorisch angetrieben.

Das Ausbringaggregat 10 kann in einem Portionsablagemodus und in einem Bandablagemodus betrieben werden. In dem Portionsablagemodus wird das Granulat diskontinuierlich in Form von durch den Granulatportionierer 12 erzeugten Granulatportionen P auf die landwirtschaftliche Nutzfläche N abgelegt. In dem Bandablagemodus wird das Granulat kontinuierlich in Form eines Granulatbandes B auf die landwirtschaftliche Nutzfläche N abgelegt.

Die Fig. 1 zeigt das Ausbringaggregat 10, währenddessen es im Portionsablagemodus betrieben wird. In dem Portionsablagemodus werden die sich in dem Portionierbereich 14 befindenden Granulatkörner durch eine Rotationsbewegung des Portionierrotors 16 von dem Portionierrotor 16 zu einer Granulatportion P zusammengeführt.

Die Granulatkörner gelangen über das Granulatführungssystem 18 in den Granulatportionierer 12 und werden durch das Granulatführungssystem 18 auch in Richtung der landwirtschaftlichen Nutzfläche N geführt. Das Granulatführungssystem 18 weist eine Zuführleitung 20 auf, über welche die Granulatströmung einem Luftabscheider 30 zugeführt wird, wobei die Granulatströmung nach Passieren des Luftabscheiders 30 in den Granulatportionierer 12 gelangt. Ferner weist das Granulatführungssystem 18 einen Schusskanal 22 auf, über welchen die erzeugten Granulatportionen P in die Granulatablagefurche geschossen werden.

Die Granulatablagefurche wird durch das Schar 24 erzeugt, wobei das Schar 24 ein Doppelscheibenschar mit zwei Scheiben 26 ist. Das Ausbringaggregat 10 ist über die Halterung 28 an einem Querbalken der landwirtschaftlichen Ausbringmaschine fixierbar.

Die Fig. 2 zeigt das Ausbringaggregat 10, währenddessen es im Bandablagemodus betrieben wird. Eine Steuerungseinrichtung des Ausbringaggregats 10 steuert den Rotorantrieb des Portionierrotors 16 in dem Bandablagemodus derart an, dass der Portionierrotor 16 eine Drehgeschwindigkeit aufweist, welche der Strömungsgeschwindigkeit der Granulatströmung entspricht. Da die Drehgeschwindigkeit des Portionierrotors 16 mit der Strömungsgeschwindigkeit der Granulatströmung übereinstimmt, erfolgt kein Zusammenführen der sich in dem Portionierbereich 14 befindenden Granulatkörner zu einer Granulatportion P. Die kontinuierliche Granulatströmung wird also ohne eine Portionsbildung durch den Granulatportionierer 12 durchgeleitet. Die Einstellung der Strömungsgeschwindigkeit der Granulatströmung erfolgt über den Luftabscheider 30.

Mittels des Luftabscheiders 30 kann Luft aus der Granulatströmung abgeschieden werden, wobei das Abscheideverhalten des Luftabscheiders 30 einstellbar ist. Wenn eine unportioniertes Granulat fördernde Granulatströmung durch den Granulatportionierer 12 durchgeleitet werden soll, kann durch das Einstellen eines geeigneten Abscheideverhaltens am Luftabscheider 30 eine pneumatische Förderung des Granulats durch den Granulatportionierer 12 erreicht werden. Über die Menge bzw. den Anteil der abgeschiedenen Luft kann ferner die Strömungsgeschwindigkeit der Granulatströmung eingestellt werden, sodass diese der Rotationsgeschwindigkeit des Portionierrotors 16 entspricht.

Der Luftabscheider 30 kann in einem Abscheidemodus und in einem Durchleitungsmodus betrieben werden. In dem Abscheidemodus wird Luft aus der Granulatströmung abgeschieden. In dem Durchleitungsmodus wird keine Luft oder zumindest eine geringere Luftmenge als im Abscheidemodus aus der Granulatströmung abgeschieden. Bei dem in der Fig. 1 dargestellten Betriebszustand wird der Luftabscheider 30 im Abscheidemodus betrieben. Bei dem in der Fig. 2 dargestellten Betriebszustand wird der Luftabscheider 30 in dem Durchleitungsmodus betrieben.

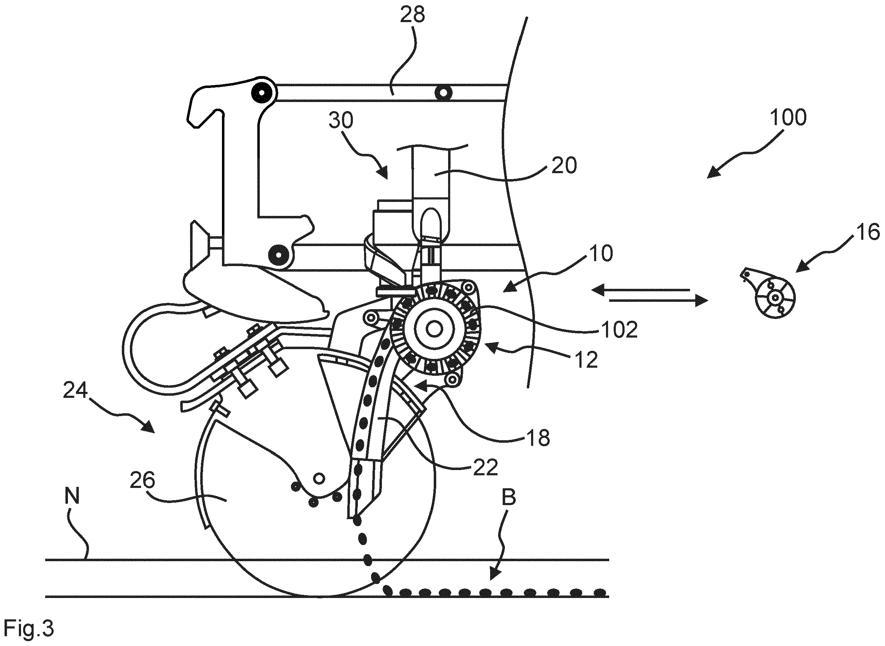

Die Fig. 3 zeigt ein System 100 aus einem Ausbringaggregat 10, aus welchem der Portionierrotor 16 entnommen und durch einen Bandablagerotor 102 ersetzt wurde. Beispielsweise kann der Granulatportionierer 12 ein Gehäuse mit einem abnehmbaren Deckel aufweisen, wobei der Portionierrotor 16 bei abgenommenem Deckel entnehmbar und durch einen Bandablagerotor 102 austauschbar ist. Wenn das Ausbringaggregat 10 in dem Portionsablagemodus betrieben werden soll, ist also der Portionierrotor 16 in den Granulatportionierer 12 einzusetzen. Wenn das Ausbringaggregat 10 in dem Bandablagemodus betrieben werden soll, ist also der Bandablagerotor 102 in den Granulatportionierer 12 einzusetzen.

Beide Rotoren 16, 102 werden mittels des Rotorantriebs des Granulatportionierers 12 rotatorisch angetrieben. Der Portionierrotor 16 ist dazu eingerichtet, durch eine Rotationsbewegung sich in dem Portionierbereich 14 befindende Granulatkörner zu einer Granulatportion P zusammenzuführen. Der Bandablagerotor 102 ist dazu eingerichtet, sich in dem Portionierbereich 14 befindende Granulatkörner durch eine Rotationsbewegung ohne Portionsbildung aus dem Portionierbereich 14 herauszufördern und somit durch den Portionierbereich 14 durchzuleiten. Hierzu weist der Bandablagerotor 102 einen umlaufenden Bürstenring auf, welcher die Granulatkörner im Bereich einer Einlassöffnung des Portionierbereichs 14 aufnehmen und im Bereich einer Auslassöffnung des Portionierbereichs 14 wieder abgeben kann, ohne dass innerhalb des Portionierbereichs 14 eine Portionsbildung stattfindet.

Alternativ zu einem Set aus mehreren Rotoren 16, 102, kann auch ein Portionierrotor 16 verwendet werden, welcher zum Betreiben des Ausbringaggregats 10 im Bandablagemodus modifiziert werden kann. Ferner Granulatportionierer 12 dazu eingerichtet sein, im Bandablagemodus ohne Portionierrotor 16 betrieben zu werden, sodass sich in dem Bandablagemodus kein Rotor in dem Portionierbereich 14 befindet. Hierzu ist der Portionierrotor 16 zum Umschalten auf den Bandablagemodus zu demontieren bzw. aus dem Granulatportionierer 12 zu entnehmen. In diesem Fall kann die Einlassöffnung des Portionierbereichs 14 direkt mit der Auslassöffnung des Portionierbereichs 14 verbunden sein, sodass die Granulatströmung ohne Portionsbildung durch den Portionierbereich 14 durchgeleitet wird.

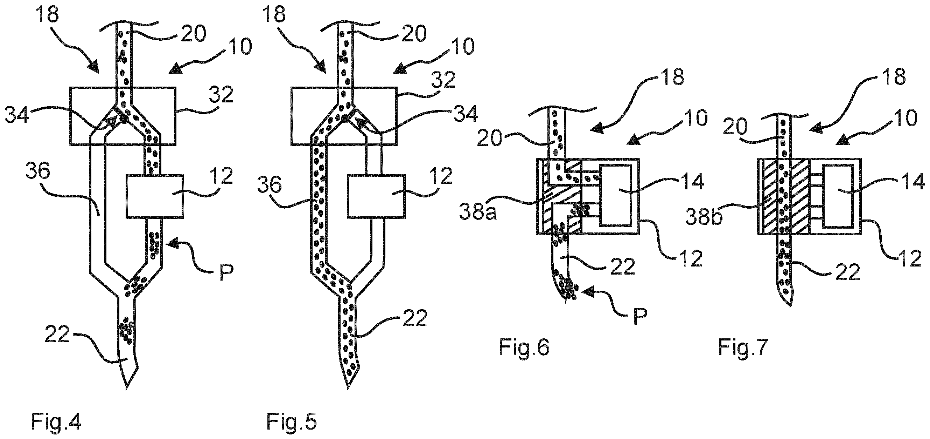

Die Fig. 4 und 5 zeigen ein Ausbringaggregat 10, dessen Granulatführungssystem 18 eine Umgehungsleitung 36 aufweist. Mittels der Umgehungsleitung 36 kann die Granulatströmung an dem Granulatportionierer 12 vorbeigeleitet werden, sodass keine Einleitung der Granulatströmung in den Granulatportionierer 12 erfolgt. Hierzu weist das Ausbringaggregat 10 eine Umschalteinrichtung 32 auf, über welche die Granulatströmung wahlweise durch den Granulatportionierer 12 oder durch die Umgehungsleitung 36 leitbar ist. Die Umschalteinrichtung 32 ist eine Strömungsweiche mit einer Umschaltklappe 34. Die Umschaltklappe 34 ist einem Y-Stück mit einem Einlasskanal und zwei Auslasskanälen angeordnet. Die Umschalteinrichtung 32 kann manuell einstellbar sein und/oder einen ansteuerbaren Aktor aufweisen, mittels welchem die Umschalteinrichtung 32 einstellbar ist.

Bei dem in der Fig. 4 dargestellten Zustand leitet die Umschalteinrichtung 32 die Granulatströmung in den Granulatportionierer 12, sodass eine Portionsbildung erfolgt. Bei dem in der Fig. 5 dargestellten Zustand wird die zu dem Granulatportionierer 12 führende Leitung durch die Umschaltklappe 34 gesperrt, sodass die Granulatströmung in die Umgehungsleitung 36 eingeleitet wird. Durch das Einleiten der Granulatströmung in die Umgehungsleitung 36 wird die Granulatströmung an dem Granulatportionierer 12 vorbeigeleitet, sodass keine Granulatportionierung erfolgt.

Die Fig. 6 und 7 zeigen ein Ausbringaggregat 10, bei welchem in den Granulatportionierer 12 unterschiedliche Adapter 38a, 38b einsetzbar sind. Der Adapter 38a beeinflusst die Granulatströmung innerhalb des Granulatportionierers 12 derart, dass die Granulatströmung dem Portionierbereich 14 zugeführt wird, sodass innerhalb des Portionierbereichs 14 eine Portionsbildung erfolgt. Der Adapter 38b weist eine Strömungsleitung auf, welche die Granulatströmung an dem Portionierbereich 14 vorbeileitet, sodass keine Portionsbildung stattfindet.

In einer anderen Ausführungsform ist lediglich ein Adapter erforderlich, um das Ausbringaggregat 10 im Bandablagemodus und im Portionsablagemodus betreiben zu können. In diesem Fall ist der Adapter beispielsweise ein Sperradapter oder ein Freigabeadapter, welcher eine Strömungsleitung zu dem Portionierbereich 14 des Granulatportionierers 12 sperrt oder freigibt.

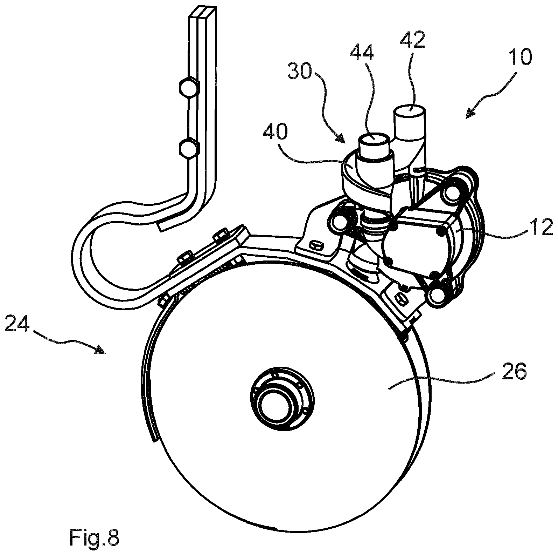

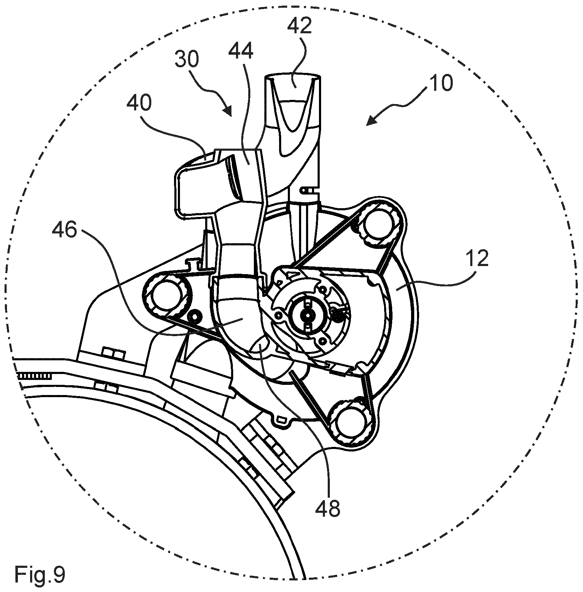

Die Fig. 8 und 9 zeigen ein Ausbringaggregat 10, bei welchem ein Luftabscheider 30 direkt auf den Granulatportionierer 12 aufgesetzt bzw. aufgesteckt ist. In diesem Fall kann mittels des Luftabscheiders 30 Luft vor dem Granulatportionierer 12 aus der Granulatströmung abgeschieden werden, also bevor diese in den Granulatportionierer 12 eingeleitet wird. Der Luftabscheider 30 ist ein Fliehkraftabscheider bzw. ein Zyklon.

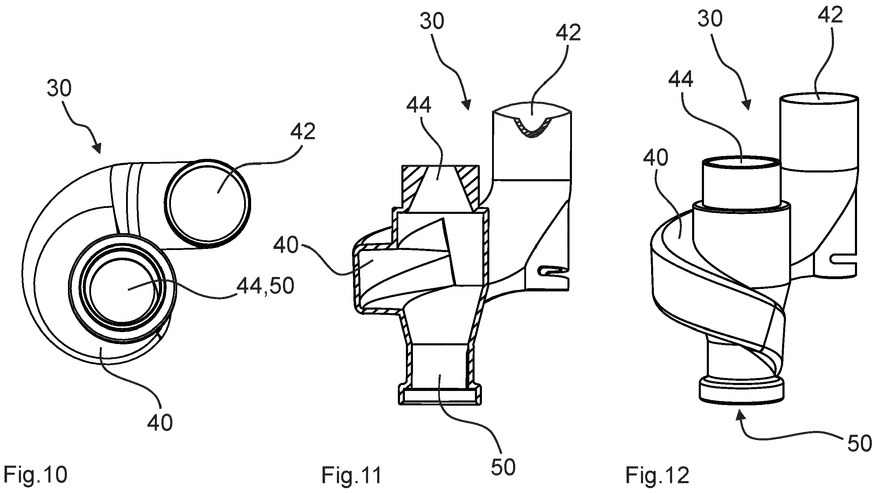

Die Fig. 10 bis 12 zeigen, dass der Luftabscheider 30 eine Wendelung 40 aufweist, über welche die Fliehkraftabscheidung realisiert wird. Die Granulatströmung wird über die Einlassöffnung 42 in das Gehäuse des Luftabscheiders 30 eingeleitet. Die aus der Granulatströmung abgeschiedene Luft kann den Luftabscheider 30 über den Luftauslass 44 verlassen. In dem dargestellten Ausführungsbeispiel wird die abgeschiedene Luft über den Luftauslass 44 in die Umgebung abgegeben. Das Abscheideverhalten des Luftabscheiders 30 kann manuell oder über einen Aktor einstellbar sein. Beispielsweise kann der Luftabscheider 30 ein bewegliches Abscheideeinstellglied aufweisen, über dessen Position und/oder Ausrichtung das Abscheideverhalten des Luftabscheiders 30 einstellbar ist. Mittels des Abscheideeinstellgliedes kann beispielsweise der Luftauslass 44 teilweise oder vollständig gesperrt werden, sodass die Menge oder der Anteil der abgeschiedenen Luft über den Sperrgrad des Luftauslasses 44 einstellbar ist.

Der Luftabscheider 30 weist eine Auslassöffnung 50 auf, über welche die Granulatströmung den Luftabscheider 30 verlassen kann. Die Auslassöffnung 50 des Luftabscheiders 30 kann direkt mit dem Einlass 46 des Granulatportionierers 12 verbunden sein. Bei dem in der Fig. 9 dargestellten Zustand ist der Portionierrotor 16 des Granulatportionierers 12 derart positioniert, dass der Einlass 46 direkt mit dem Auslass 48 des Granulatportionierers 12 verbunden ist. Im Bandablagemodus kann der Portionierrotor 16 beispielsweise stillstehen, sodass die Granulatströmung ohne eine Portionsbildung durch den Granulatportionierer 12 durchgeleitet wird.

### Bezugszeichen

- 10: Ausbringaggregat
- 12: Granulatportionierer
- 14: Portionierbereich
- 16: Portionierrotor
- 18: Granulatführungssystem
- 20: Zuführleitung
- 22: Schusskanal
- 24: Schar
- 26: Scheiben
- 28: Halterung
- 30: Luftabscheider
- 32: Umschalteinrichtung
- 34: Umschaltklappe
- 36: Umgehungsleitung
- 38a, 38b: Adapter
- 40: Wendelung
- 42: Einlassöffnung
- 44: Luftauslass
- 46: Einlass
- 48: Auslass
- 50: Auslassöffnung

- 100: System
- 102: Bandablagerotor

- B: Granulatband
- N: Nutzfläche
- P: Granulatportionen

## Patentansprüche

1. Ausbringaggregat (10) für eine landwirtschaftliche Ausbringmaschine zum Ablegen von Granulat auf eine landwirtschaftliche Nutzfläche (N), mit
- einem Granulatportionierer (12), in welchen eine unportioniertes Granulat fördernde Granulatströmung einleitbar ist und mittels welchem aus der Granulatströmung Granulatportionen (P) erzeugbar sind;
- **gekennzeichnet durch** einen Luftabscheider (30), mittels welchem Luft aus der Granulatströmung abscheidbar ist;
und **dadurch**, dass das Ausbringaggregat (10) in einem Portionsablagemodus, in welchem das Granulat diskontinuierlich in Form von **durch** den Granulatportionierer (12) erzeugten Granulatportionen (P) auf die landwirtschaftliche Nutzfläche (N) abgelegt wird, und in einem Bandablagemodus, in welchem das Granulat kontinuierlich in Form eines Granulatbandes (B) auf die landwirtschaftliche Nutzfläche (N) abgelegt wird, betreibbar ist.

2. Ausbringaggregat (10) nach Anspruch 1,
**dadurch gekennzeichnet, dass** der Luftabscheider (30) in Strömungsrichtung der Granulatströmung vor dem Granulatportionierer (12) angeordnet ist.

3. Ausbringaggregat (10) nach Anspruch 1,
**dadurch gekennzeichnet, dass** der Luftabscheider (30) ein Bestandteil des Granulatportionierers (12) ist.

4. Ausbringaggregat (10) nach einem der vorstehenden Ansprüche,
**dadurch gekennzeichnet, dass** das Abscheideverhalten des Luftabscheiders (30) einstellbar ist.

5. Ausbringaggregat (10) nach einem der vorstehenden Ansprüche,
**dadurch gekennzeichnet, dass** der Luftabscheider (30) in einem Abscheidemodus, in welchem Luft aus der Granulatströmung abgeschieden wird, und einem Durchleitungsmodus, in welchem keine Luft oder zumindest eine geringere Luftmenge als im Abscheidemodus aus der Granulatströmung abgeschieden wird, betreibbar ist.

6. Ausbringaggregat (10) nach Anspruch 4 oder 5,
**dadurch gekennzeichnet, dass** das Abscheideverhalten des Luftabscheiders (30) manuell einstellbar ist und/oder der Luftabscheider (30) manuell zwischen dem Abscheidemodus und dem Durchleitungsmodus umschaltbar ist.

7. Ausbringaggregat (10) nach einem der Ansprüche 4 bis 6,
**dadurch gekennzeichnet, dass** der Luftabscheider (30) einen ansteuerbaren Aktor aufweist, mittels welchem das Abscheideverhalten des Luftabscheiders (30) einstellbar ist und/oder mittels welchem der Luftabscheider (30) zwischen dem Abscheidemodus und dem Durchleitungsmodus umschaltbar ist.

8. Ausbringaggregat (10) nach einem der vorstehenden Ansprüche,
**dadurch gekennzeichnet, dass** der Granulatportionierer (12) ein in einem Portionierbereich (14) angeordneten Portionierrotor (16) aufweist, welcher mittels eines Rotorantriebs des Granulatportionierers (12) rotatorisch antreibbar und dazu eingerichtet ist, in dem Portionsablagemodus durch eine Rotationsbewegung sich in dem Portionierbereich (14) befindende Granulatkörner zu einer Granulatportion (P) zusammenzuführen, wobei eine Steuerungseinrichtung des Ausbringaggregats (10) vorzugsweise dazu eingerichtet ist, den Rotorantrieb des Portionierrotors (16) in dem Bandablagemodus derart anzusteuern, dass der Portionierrotor (16) eine Drehgeschwindigkeit aufweist, welche der Strömungsgeschwindigkeit der Granulatströmung entspricht, sodass kein Zusammenführen der sich in dem Portionierbereich (14) befindenden Granulatkörner zu einer Granulatportion (P) erfolgt.

9. Ausbringaggregat (10) nach Anspruch 8,
**dadurch gekennzeichnet, dass** der Granulatportionierer (12) dazu eingerichtet ist, in dem Bandablagemodus ohne Portionierrotor (16) oder mit einem im Vergleich zum Portionsablagemodus modifizierten Portionierrotor (16) betrieben zu werden.

10. Ausbringaggregat (10) nach einem der vorstehenden Ansprüche,
**dadurch gekennzeichnet, dass** in einen Portionierbereich (14) des Granulatportionierers (12) im Portionsablagemodus ein Portionierrotor (16) und im Bandablagemodus ein Bandablagerotor (102) eingesetzt ist, wobei der Portionierrotor (16) und der Bandablagerotor (102) mittels eines Rotorantriebs des Granulatportionierers (12) rotatorisch antreibbar sind und der Portionierrotor (16) dazu eingerichtet ist, durch eine Rotationsbewegung sich in dem Portionierbereich (14) befindende Granulatkörner zu einer Granulatportion (P) zusammenzuführen und der Bandablagerotor (102) dazu eingerichtet ist, sich in dem Portionierbereich (14) befindende Granulatkörner durch eine Rotationsbewegung ohne Portionsbildung aus dem Portionierbereich (14) herauszufördern und/oder durch den Portionierbereich (14) durchzuleiten.

11. Ausbringaggregat (10) nach einem der vorstehenden Ansprüche,
**gekennzeichnet durch** ein Granulatführungssystem (18), welches dazu eingerichtet ist, die Granulatströmung in dem Bandablagemodus und/oder dem Portionsablagemodus in den Granulatportionierer (12), insbesondere in einen Portionierbereich (14) des Granulatportionierers (12), einzuleiten, wobei das Granulatführungssystem (18) vorzugsweise eine Umgehungsleitung (36) aufweist, mittels welcher die Granulatströmung an dem Granulatportionierer (12) vorbeileitbar ist, sodass keine Einleitung der Granulatströmung in den Granulatportionierer (12) erfolgt.

12. Ausbringaggregat (10) nach Anspruch 11,
**dadurch gekennzeichnet, dass** die Umgehungsleitung (36) mit einer Umschalteinrichtung (32) verbunden ist, über welche die Granulatströmung wahlweise durch den Granulatportionierer (12) oder durch die Umgehungsleitung (36) leitbar ist.

13. Verfahren zum Ablegen von Granulat auf eine landwirtschaftliche Nutzfläche (N) mittels eines Ausbringaggregats (10) einer landwirtschaftlichen Ausbringmaschine nach einem der vorstehenden Ansprüche, mit den Schritten:
- Einleiten einer unportioniertes Granulat fördernden Granulatströmung in einen Granulatportionierer (12);
- Erzeugen von Granulatportionen (P) mittels des Granulatportionierers (12) aus der in den Granulatportionierer (12) eingeleiteten Granulatströmung;
- Abscheiden von Luft aus der Granulatströmung mittels eines Luftabscheiders (30) des Ausbringaggregats (10).

## Claims

1. Application unit (10) for an agricultural application machine for depositing granulate on an agricultural area (N), comprising
- a granulate portioner (12) into which a granulate flow conveying unportioned granulate can be introduced and by means of which granulate portions (P) can be produced from the granulate flow;
- **characterized by** an air separator (30) by means of which air can be separated from the granulate flow;
**and in that** the application unit (10) can be operated in a portion depositing mode, in which the granulate is deposited on the agricultural area (N) discontinuously in the form of granulate portions (P) produced by the granulate portioner (12), and in a band depositing mode, in which the granulate is deposited on the agricultural area (N) continuously in the form of a granulate band (B).

2. Application unit (10) according to claim 1,
**characterized in that** the air separator (30) is arranged upstream of the granulate portioner (12) in the flow direction of the granulate flow.

3. Application unit (10) according to claim 1,
**characterized in that** the air separator (30) is a component of the granulate portioner (12).

4. Application unit (10) according to any of the preceding claims,
**characterized in that** the separation behavior of the air separator (30) is adjustable.

5. Application unit (10) according to any of the preceding claims,
**characterized in that** the air separator (30) can be operated in a separation mode, in which air is separated from the granulate flow and a through-flow mode, in which no air or at least a smaller amount of air than in the separation mode is separated from the granulate flow.

6. Application unit (10) according to claim 4 or 5,
**characterized in that** the separation behavior of the air separator (30) can be adjusted manually and/or the air separator (30) can be manually switched between the separation mode and the through-flow mode.

7. Application unit (10) according to any of claims 4 to 6,
**characterized in that** the air separator (30) has a controllable actuator by means of which the separation behavior of the air separator (30) can be adjusted and/or by means of which the air separator (30) can be switched between the separation mode and the through-flow mode.

8. Application unit (10) according to any of the preceding claims,
**characterized in that** the granulate portioner (12) has a portioning rotor (16) which is arranged in a portioning region (14), can be driven in rotation by means of a rotor drive of the granulate portioner (12) and is designed to combine granulate grains located in the portioning region (14) to form a granulate portion (P) by means of a rotational movement in the portion depositing mode, a control device of the application unit (10) preferably being designed to control the rotor drive of the portioning rotor (16) in the band depositing mode such that the portioning rotor (16) has a rotational speed which corresponds to the flow speed of the granulate flow, so that the granulate grains located in the portioning region (14) are not combined to form a granulate portion (P).

9. Application unit (10) according to claim 8,
**characterized in that** the granulate portioner (12) is designed to be operated in the band depositing mode without a portioning rotor (16) or with a portioning rotor (16) that is modified in comparison with the portion depositing mode.

10. Application unit (10) according to any of the preceding claims,
**characterized in that** a portioning rotor (16) is inserted into a portioning region (14) of the granulate portioner (12) in the portion depositing mode and a band depositing rotor (102) is inserted into said portion in the band depositing mode, it being possible for the portioning rotor (16) and the band depositing rotor (102) to be driven in rotation by means of a rotor drive of the granulate portioner (12), and the portioning rotor (16) being designed to combine granulate grains located in the portioning region (14) to form a granulate portion (P) by means of a rotational movement and the band depositing rotor (102) being designed to convey granulate grains located in the portioning region (14) out of the portioning region (14) and/or direct said granulate grains through the portioning region (14) by means of a rotational movement without portion formation.

11. Application unit (10) according to any of the preceding claims,
**characterized by** a granulate guiding system (18) which is designed to introduce the granulate flow in the band depositing mode and/or the portion depositing mode into the granulate portioner (12), in particular into a portioning region (14) of the granulate portioner (12), the granulate guiding system (18) preferably having a bypass line (36) by means of which the granulate flow can be directed past the granulate portioner (12) so that the granulate flow is not introduced into the granulate portioner (12).

12. Application unit (10) according to claim 11,
**characterized in that** the bypass line (36) is connected to a switching device (32) via which the granulate flow can be directed selectively through the granulate portioner (12) or through the bypass line (36).

13. Method for depositing granulate on an agricultural area (N) by means of an application unit (10) of an agricultural application machine according to any of the preceding claims, comprising the steps of:
- introducing a granulate flow conveying unportioned granulate into a granulate portioner (12);
- producing granulate portions (P) by means of the granulate portioner (12) from the granulate flow introduced into the granulate portioner (12);
- separating air from the granulate flow by means of an air separator (30) of the application unit (10).

## Revendications

1. Unité d'épandage (10) pour une machine d'épandage agricole permettant de déposer des granulés sur une surface agricole utile (N), comportant
- un appareil de portionnement de granulés (12) dans lequel peut être introduit un flux de granulés transportant des granulés en vrac et au moyen duquel des portions de granulés (P) peuvent être produites à partir du flux de granulés ;
- **caractérisée par** un séparateur d'air (30) au moyen duquel de l'air peut être séparé du flux de granulés ;
**et caractérisée en ce que** l'unité d'épandage (10) peut fonctionner dans un mode de dépôt de portions dans lequel les granulés sont déposés de manière discontinue sur la surface agricole utile (N) sous la forme de portions de granulés (P) produites par l'appareil de portionnement de granulés (12), et dans un mode de dépôt de bande dans lequel les granulés sont déposés en continu sur la surface agricole utile (N) sous la forme d'une bande de granulés (B).

2. Unité d'épandage (10) selon la revendication 1,
**caractérisée en ce que** le séparateur d'air (30) est disposé en amont de l'appareil de portionnement de granulés (12) dans la direction d'écoulement du flux de granulés.

3. Unité d'épandage (10) selon la revendication 1,
**caractérisée en ce que** le séparateur d'air (30) est un composant de l'appareil de portionnement de granulés (12).

4. Unité d'épandage (10) selon l'une des revendications précédentes,
**caractérisée en ce que** le comportement de séparation du séparateur d'air (30) est réglable.

5. Unité d'épandage (10) selon l'une des revendications précédentes,
**caractérisée en ce que** le séparateur d'air (30) peut fonctionner dans un mode de séparation dans lequel de l'air est séparé du flux de granulés, et dans un mode de passage dans lequel aucune quantité d'air ou au moins une quantité d'air inférieure à celle dans le mode de séparation est séparée du flux de granulés.

6. Unité d'épandage (10) selon la revendication 4 ou 5,
**caractérisée en ce que** le comportement de séparation du séparateur d'air (30) peut être réglé manuellement et/ou le séparateur d'air (30) peut être commuté manuellement entre le mode de séparation et le mode de passage.

7. Unité d'épandage (10) selon l'une des revendications 4 à 6,
**caractérisée en ce que** le séparateur d'air (30) présente un actionneur pouvant être commandé, au moyen duquel le comportement de séparation du séparateur d'air (30) peut être réglé et/ou au moyen duquel le séparateur d'air (30) peut être commuté entre le mode de séparation et le mode de passage.

8. Unité d'épandage (10) selon l'une des revendications précédentes,
**caractérisée en ce que** l'appareil de portionnement de granulés (12) présente un rotor de portionnement (16) disposé dans une zone de portionnement (14), lequel rotor peut être entraîné en rotation au moyen d'un entraînement de rotor de l'appareil de portionnement de granulés (12) et est conçu pour rassembler, dans le mode de dépôt de portions, au moyen d'un mouvement de rotation, des granulés se trouvant dans la zone de portionnement (14) en une portion de granulés (P), dans laquelle un dispositif de commande de l'unité d'épandage (10) est de préférence configuré pour commander l'entraînement de rotor du rotor de portionnement (16) dans le mode de dépôt de bande de telle sorte que le rotor de portionnement (16) présente une vitesse de rotation qui correspond à la vitesse d'écoulement du flux de granulés, de sorte qu'aucun regroupement des granulés se trouvant dans la zone de portionnement (14) n'est effectué pour former une portion de granulés (P).

9. Unité d'épandage (10) selon la revendication 8,
**caractérisée en ce que** l'appareil de portionnement de granulés (12) est conçu pour fonctionner dans le mode de dépôt de bande sans rotor de portionnement (16) ou avec un rotor de portionnement (16) modifié par rapport au mode de dépôt de portions.

10. Unité d'épandage (10) selon l'une des revendications précédentes,
**caractérisée en ce qu'**un rotor de portionnement (16) est inséré dans une zone de portionnement (14) de l'appareil de portionnement de granulés (12) dans le mode de dépôt de portions et un rotor de dépôt de bande (102) est inséré dans ladite zone de portionnement de l'appareil de portionnement de granulés dans le mode de dépôt de bande, dans laquelle le rotor de portionnement (16) et le rotor de dépôt de bande (102) peuvent être entraînés en rotation au moyen d'un entraînement de rotor de l'appareil de portionnement de granulés (12) et le rotor de portionnement (16) est conçu pour réunir, au moyen d'un mouvement de rotation, des granulés se trouvant dans la zone de portionnement (14) pour former une portion de granulés (P) et le rotor de dépôt de bande (102) est conçu pour transporter des granulés se trouvant dans la zone de portionnement (14) hors de la zone de portionnement (14) au moyen d'un mouvement de rotation sans formation de portions et/ou pour les diriger à travers la zone de portionnement (14).

11. Unité d'épandage (10) selon l'une des revendications précédentes,
**caractérisée par** un système de guidage de granulés (18) qui est conçu pour introduire le flux de granulés, dans le mode de dépôt de bande et/ou le mode de dépôt de portions, dans l'appareil de portionnement de granulés (12), en particulier dans une zone de portionnement (14) de l'appareil de portionnement de granulés (12), dans laquelle le système de guidage de granulés (18) présente de préférence une conduite de dérivation (36) au moyen de laquelle le flux de granulés peut être dirigé au-delà de l'appareil de portionnement de granulés (12), de sorte qu'aucune introduction du flux de granulés dans l'appareil de portionnement de granulés (12) n'est effectuée.

12. Unité d'épandage (10) selon la revendication 11,
**caractérisée en ce que** la conduite de dérivation (36) est reliée à un dispositif de commutation (32) par l'intermédiaire duquel le flux de granulés peut être dirigé au choix à travers l'appareil de portionnement de granulés (12) ou à travers la conduite de dérivation (36).

13. Procédé pour le dépôt de granulés sur une surface agricole utile (N) au moyen d'une unité d'épandage (10) d'une machine d'épandage agricole selon l'une des revendications précédentes, comportant les étapes consistant à :
- introduire un flux de granulés transportant des granulés en vrac dans un appareil de portionnement de granulés (12) ;
- produire des portions de granulés (P) au moyen de l'appareil de portionnement de granulés (12) à partir du flux de granulés introduit dans l'appareil de portionnement de granulés (12) ;
- séparer de l'air du flux de granulés au moyen d'un séparateur d'air (30) de l'unité d'épandage (10).
